# EUROPÄISCHE PATENTSCHRIFT

(11) **EP 1 128 946 B1**
(45) Veröffentlichungstag und Bekanntmachung des Hinweises auf die Patenterteilung: **08.01.2003**
(21) Anmeldenummer: 99972147.5
(22) Anmeldetag: 28.10.1999
(51) Int. Cl.: B29C 44/12, A47C 31/02

(54) **VERFAHREN ZUM HERSTELLEN EINES SCHAUMKÖRPERTEILES, INSBESONDERE EINES POLSTERSCHAUMTEILES FÜR EINEN FLUG- ODER FAHRGASTSITZ**
METHOD FOR PRODUCING A FOAM PART, NOTABLY A FOAM UPHOLSTERY PART FOR AN AIRCRAFT OR VEHICLE SEAT
PROCEDE DE FABRICATION D'UN CORPS EN MOUSSE, EN PARTICULIER D'UNE PARTIE DE REMBOURRAGE EN MOUSSE POUR UN SIEGE D'AVION OU DE VEHICULE

(30) Priorität: 13.11.1998 DE 19852433
(43) Veröffentlichungstag der Anmeldung: 05.09.2001
(73) Patentinhaber: GOTTLIEB BINDER GMBH & Co., 71084 Holzgerlingen (DE)
(72) Erfinder: TUMA, Jan, D-12681 Berlin (DE)
(74) Vertreter: Patentanwälte Bartels und Partner
(86) Internationale Anmeldenummer: EP9908173
(87) Internationale Veröffentlichungsnummer: WO00029191

(56) Entgegenhaltungen:
- FR-A- 2 636 057
- US-A- 5 688 576

## Beschreibung

Die Erfindung bezieht sich auf ein Verfahren zum Herstellen eines Schaumkörperteiles, insbesondere eines Polsterschaumteiles für einen Flug- oder Fahrgastsitz, bei welchem Verfahren im Schaumkörperteil zumindest eine Ausnehmung, die sich zu dessen Oberfläche hin öffnet und zur Aufnahme eines Verankerungsteiles für ein Bezugsmaterial vorgesehen ist, ausgebildet wird, indem in einer den Schaumkörperteil formenden Einschäumform zumindest ein entfernbares Formteil angeordnet wird, das Formflächen aufweist, die in der Ausnehmung im Abstand von der Oberfläche des Schaumkörperteiles eine Erweiterung bilden.

Die in einem solchen, allgemein bekannten Verfahren ausgebildete innere Erweiterung der Ausnehmung des Schaumkörperteiles ermöglicht eine gute Verankerung von in der Erweiterung sitzenden Verankerungsteilen, so daß eine sichere Befestigung von Bezugsmaterialien ermöglicht wird. Bei der Durchführung üblicher Verfahren zur Herstellung von Schaumkörperteilen mit Ausnehmungen, die innere Erweiterungen besitzen, treten jedoch Probleme auf. Das Entformen des Formteiles, welches beim Einschäumvorgang die Ausnehmung erzeugt, gestaltet sich insbesondere dann schwierig, wenn die Ausnehmung eine die Verankerungswirkung begünstigende Querschnittsform besitzt. Solche Querschnittsformen ermöglichen den Austritt des betreffenden Formteiles beim Entformvorgang nur unter einem hohen Kraftaufwand, was zur Beschädigung des Schaumkörperteiles durch Bruch oder Riß führen kann.

Der Erfindung liegt die Aufgabe zugrunde, ein Verfahren aufzuzeigen, das eine problemlose Herstellung eines Schaumkörperteiles mit einer im Hinblick auf eine gute Verankerungswirkung ausgelegten Ausnehmung ermöglicht.

Bei einem Verfahren der eingangs genannten Art ist diese Aufgabe erfindungsgemäß dadurch gelöst, daß als Formteil ein Profilkörper mit näherungsweise T-förmigem Querschnitt verwendet wird, daß der Fußteil der T-Form an der formgebenden Wand der Einschäumform anliegend angeordnet wird, so daß der Querbalken der T-Form die Erweiterung der Ausnehmung bildet, und daß eine solche T-Form verwendet wird, bei der die Unterseite des Querbalkens in zumindest einem ihrer an den Fußteil angrenzenden Abschnitte mit diesem einen stumpfen Winkel bildet.

Dadurch, daß der Übergang zwischen der Erweiterung der Ausnehmung und deren Mündungskanal nicht über rechtwinklige Kanten erfolgt, sondern aufgrund des am Formteil vorgesehenen stumpfen Winkels auf zumindest einer Seite eine leicht geneigte Schrägfläche den Übergang zum Mündungskanal der Ausnehmung bildet, wird das Herausnehmen des Formteiles, das unter Aufspreizen der Ausnehmung erfolgt, wesentlich erleichtert. Trotz der leichten Abschrägung am Übergang zwischen Querbalken und Fußteil der T-Form bleibt die gute Verankerungswirkung erhalten.

Der geneigte Verlauf der betreffenden Wandteile hat den zusätzlichen Vorteil, daß beim Einschäumvorgang die Gefahr einer Lunkerbildung durch unter dem Querbalken der T-Form eingefangene Schaumblasen vermieden ist. Dadurch ergibt sich eine einwandfreie Struktur des Schaumkörperteiles.

Vorzugsweise wird zur Verankerung des Bezugsmaterials in der Ausnehmung des Schaumkörperteiles ein Verankerungsteil mit einem Flachprofil verwendet, das in der Erweiterung der Ausnehmung des Schaumkörperteiles im wesentlichen passend aufnehmbar ist.

Hierbei kann so vorgegangen werden, daß das Flachprofil durch den dem Fußteil der T-Form entsprechenden Kanal der Ausnehmung in diese eingeführt und sodann unter Spreizen der Ausnehmung zum Einsetzen in deren Erweiterung verdreht wird.

Eine am Flachprofil des Verankerungsteiles angebrachte Befestigungsfahne für Bezugsmaterial liegt beim Einführen des Flachprofiles in den Kanal am Flachprofil an, so daß die Befestigungsfahne dem Vorgang des Einführens praktisch keinen Widerstand entgegensetzt. Das Flachprofil wird sodann in der Richtung verdreht, daß die Verbindungsstelle zwischen Flachprofil und Befestigungsfahne dem Mündungskanal der Ausnehmung zugekehrt ist, sich die Befestigungsfahne daher durch den Mündungskanal der Ausnehmung erstreckt.

Gegenstand der Erfindung ist auch ein nach dem erfindungsgemäßen Verfahren hergestelltes Schaumkörperteil, das die Merkmale des Anspruches 7 aufweist.

Nachstehend ist die Erfindung anhand der Zeichnung im einzelnen erläutert. Es zeigen:
- Fig. 1: eine vergrößert gezeichnete perspektivische Ansicht eines Formteiles, das für die Durchführung des erfindungsgemäßen Verfahrens in einer nicht gezeigten Einschäumform verwendbar ist,
- Fig. 2: eine in etwa gleichem Maßstab wie Fig. 1 gezeichnete perspektivische Ansicht eines Verankerungsteiles für die Verwendung bei einem nach dem erfindungsgemäßen Verfahren hergestellten Schaumkörperteil und
- Fig. 3 bis 10: mit jeweils abgebrochenem Fußteil gezeichnete Querschnitte weiterer Beispiele von Formteilen für die Durchführung des erfindungsgemäßen Verfahrens.

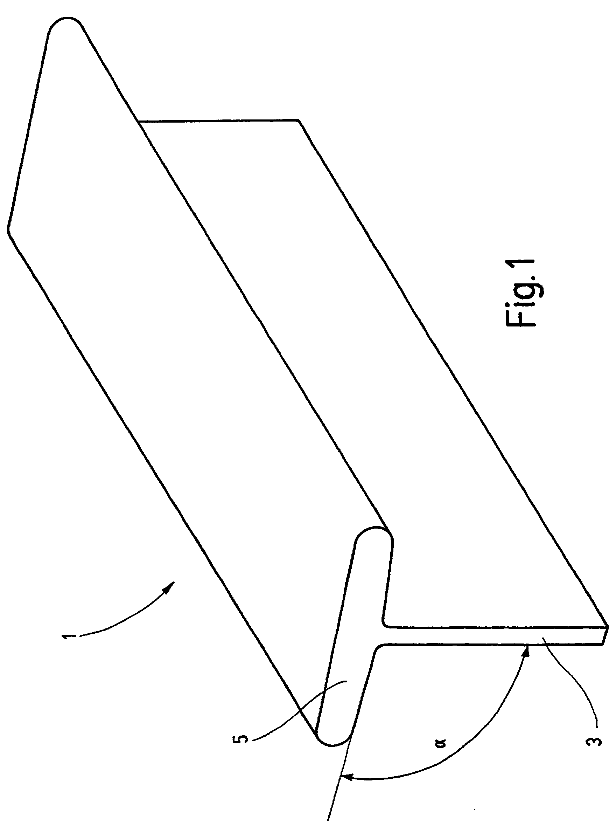

Fig. 1 zeigt ein als Ganzes mit 1 bezeichnetes Formteil, das zur Durchführung des erfindungsgemäßen Verfahrens in einer nicht dargestellten Einschäumform anbringbar ist, die zum Schäumen eines betreffenden Schaumkörperteiles, beispielsweise eines Polsterschaumteiles, mit Schaummaterial befüllbar ist. Das Formteil 1 ist ein Profilkörper, vorzugsweise aus metallischem Werkstoff, der eine der T-Form angenäherte Querschnittsform mit einem leistenartigen Fußteil 3 und einem kopfseitigen Querbalken 5 besitzt. Das Formteil 1 ist in der Einschäumform so angeordnet, daß das untere Ende des Fußteiles 3 an der formgebenden Wand der Einschäumform anliegt Bei dieser Anordnung weist die durch das Formteil 1 im Schaumkörperteil gebildete Ausnehmung einen durch den Fußteil 3 geformten, schmalen, an der Oberfläche des Schaumkörperteiles mündenden Kanal auf, der an seinem inneren Endbereich in eine durch den Querbalken 5 geformte Erweiterung übergeht.

Der Übergang zwischen der durch den Querbalken 5 definierten Erweiterung zum durch den Fußteil 3 gebildeten Mündungskanal erfolgt nicht über eine scharfe, rechtwinklige Kante, sondern über eine durch die Unterseite des Querbalkens 5 gebildete, leicht schräg zum Fußteil 3 verlaufende geneigte Fläche, die mit dem Fußteil 3 außenseitig einen stumpfen Winkel α von mehr als 90° einschließt. Der Winkel α liegt vorzugsweise im Bereich von etwa 93° bis 100° und beträgt bei dem in Fig. 1 gezeigten Beispiel etwa 95°. Außerdem ist der Übergang zwischen Fußteil 3 und Querbalken 5 abgerundet. Aufgrund dieser Formgebung läßt sich das Formteil 1 nach Durchführen des Schäumvorganges unter mäßigem Aufspreizen des durch den Fußteil 3 gebildeten Kanals ohne Schwierigkeiten herausziehen. Trotz der den Entformvorgang begünstigenden Formgebung hat die durch den Querbalken 5 des Formteiles 1 gebildete Erweiterung eine sehr gute Verankerungswirkung in Verbindung mit einem Verankerungsteil, das in der Erweiterung in etwa passend aufgenommen wird.

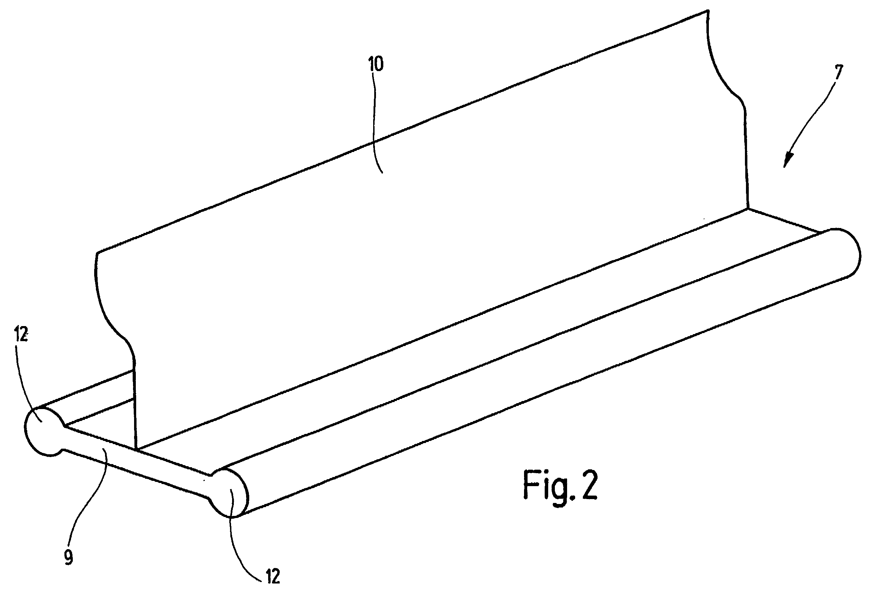

Fig. 2 zeigt ein derartiges, als Ganzes mit 7 bezeichnetes Verankerungsteil, das in die durch den Formteil 1 gebildete Ausnehmung des Schaumkörperteiles einsetzbar ist. Das Verankerungsteil 7 weist ein Flachprofil 9 aus extrudiertem Kunststoffmaterial auf, dessen Querschnittsform und -größe in etwa dem Querschnitt der durch den Querbalken 5 des Formteiles gebildeten Erweiterung angepaßt ist. An einer Breitseite des Flachprofils 9 ist mittig und längs verlaufend eine Befestigungsfahne 10 für Bezugsmaterial am Flachprofil 9 befestigt. Die Längsränder des Flachprofils 9 weisen abgerundete Verdickungen 12 auf.

Zum Einsetzen des Verankerungsteiles 7 in die durch das Formteil 1 gebildete Ausnehmung im Schaumkörperteil wird die Befestigungsfahne 11 an das Flachprofil 9 angelegt, dieses durch den vom Fußteil 3 des Formteiles 1 gebildeten Mündungskanal in die Ausnehmung eingeführt, bis eine der randseitigen Verdickungen 12 den Bereich der durch den Querbalken 5 gebildeten Erweiterung der Ausnehmung erreicht. Sodann wird, unter Aufspreizen der Ausnehmung, das Verankerungsteil 7 so verdreht, daß das Flachprofil 9 in der Erweiterung zu sitzen kommt und sich die Befestigungsfahne 10 durch den Mündungskanal der Ausnehmung im Schaumkörperteil erstreckt.

Das Flachprofil 9 besteht vorzugsweise aus thermoplastischem Material. Die Befestigungsfahne 10 besteht vorzugsweise aus textilen Stoffen oder Geweben oder aus Kunststoffolie. Das Flachprofil 9 kann in Längsrichtung randseitig in alternierender Reihenfolge mit Ausnehmungen (nicht dargestellt) versehen sein, um das Verlegen entlang von kurvenförmigen Bahnen zu erleichtern und im übrigen die Funktionssicherheit und Dauerhaftigkeit zu gewährleisten.

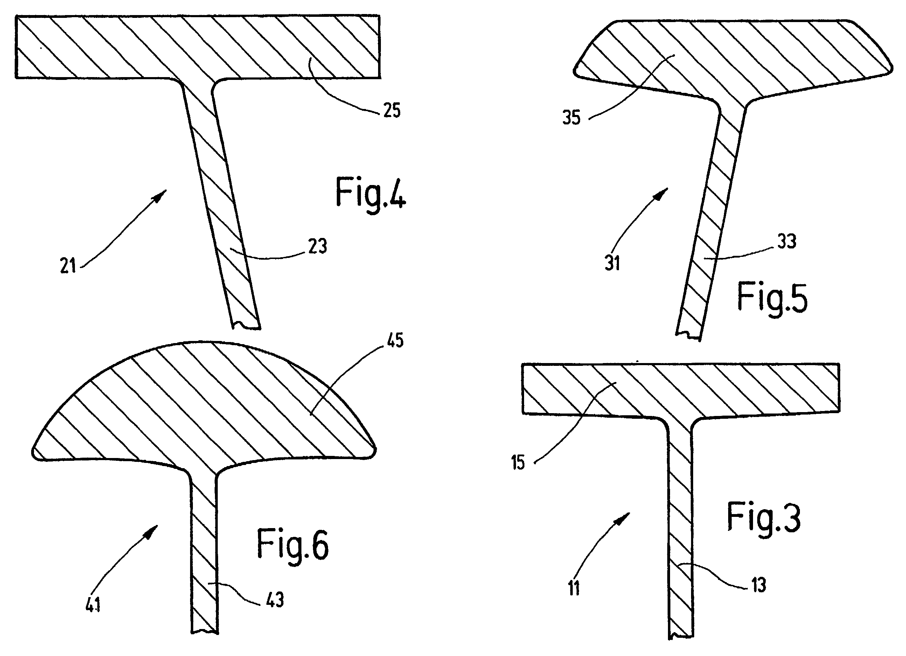

Die Fig. 3 bis 10 zeigen einige ausgewählte Beispiele aus der Vielzahl möglicher Querschnittsformen von Formteilen, die für die Durchführung des erfindungsgemäßen Verfahrens verwendbar sind. In den Fig. 3 bis 10 sind Teile, die solchen von Fig. 1 entsprechen, mit Bezugszahlen versehen, die gegenüber Fig. 1, von Figur zu Figur jeweils um 10 fortschreitend, erhöht sind. So zeigt Fig. 3 eine der Fig. 1 ähnliche T-Form des Formteiles 11, bei der im Unterschied zum Formteil 1 die Außenseiten des Querbalkans 15 nicht abgerundet sind. Diese Formgebung erhöht die Verankerungswirkung für das in das Schaumkörperteil eingesetzte Verankerungsteil, wobei die beidseitigen, stumpfwinkligen und abgerundeten Übergänge zwischen Fußteil 13 und Querbalken 15 ein störungsfreies Herausnehmen des Formteiles 11 ermöglichen.

Fig. 4 zeigt eine Formgebung des Formteiles 21, die sich gegenüber Fig. 3 dadurch unterscheidet, daß der Fußteil 23 zur Haupterstreckung des Querbalkens 25 nicht senkrecht, sondern schief verlaufend angeordnet ist, wobei lediglich auf einer Seite ein stumpfer Winkel zwischen Fußteil 23 und Querbalken 25 gebildet ist. Die im Schaumkörperteil so gebildete Ausnehmung zeichnet sich dadurch aus, daß der in das Schaumkörpertei) eingesetzte Verankerungsteil besonders sicher gegen Torsion gesichert ist, wodurch die Gefahr vermieden ist, daß bei der Benutzung, wenn das Schaumkörperteil beispielsweise als Sitzpolsterung fungiert, ein Herausdrehen des Verankerungsteiles durch die wechselnden Sitzbelastungen durch den Sitzbenutzer erfolgt.

Bei dem in Fig. 5 gezeigten Formteil 31 ist der Fußteil 33, ähnlich wie bei Fig. 4, gegenüber dem Querbalken 35 schräg verlaufend, während der Querbalken 35 unsymmetrisch, mit geschwungenen Endrändern, ausgebildet ist. Die hierdurch gebildete Ausnehmung im Schaumkörperteil zeichnet sich ebenfalls durch eine torsionsfeste Verankerungswirkung aus.

Fig. 6 zeigt ein Formteil 41 mit an der Oberseite kreisbogenförmig abgerundetem Querbalken 45 und leicht gekrümmten Unterseiten des Querbalkens 45 zu beiden Seiten des Fußteiles 43. Auch hierbei ergibt sich eine hohe Torsionssicherheit.

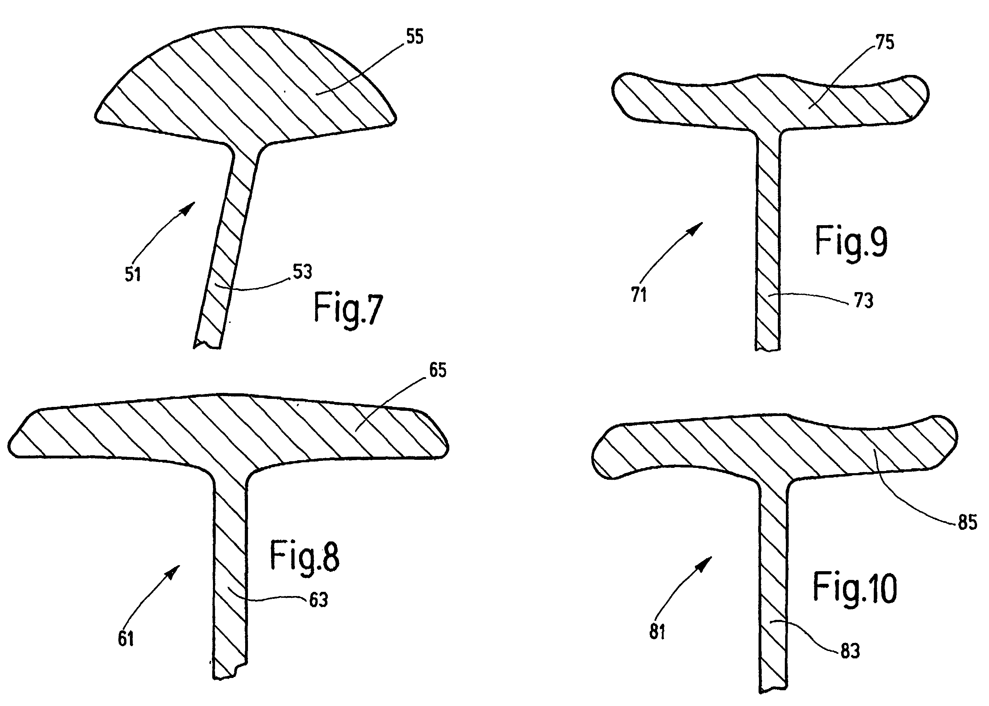

Bei dem Beispiel von Fig. 7 sind die an den Fußteil 43 angrenzenden Unterseiten des Querbalkens 55, im Unterschied zu Fig. 6, nicht geschwungen, jedoch ist der Fußteil 53 relativ zum Querbalken 55 schräg stehend, wodurch sich auch bei diesem Ausführungsbeispiel eine besonders gute Torsionssicherheit der Verankerung bietet.

Fig. 8 bis 10 zeigen weitere Beispiele für Formteile 61, 71 bzw. 81 mit jeweils senkrecht stehenden Fußteilen 63, 73 bzw. 83, wobei jedoch die Querbalken 65, 75 bzw. 85 unregelmäßige Formgebungen aufweisen.

Bei sämtlichen dieser Konfigurationen erfolgt der Übergang zwischen Querbalken und Fußteil auf zumindest einer Seite desselben unter Bildung eines stumpfen Winkels von mehr als 90°, wobei die Übergangsstellen jeweils abgerundet, d.h. nicht scharfkantig sind, so daß ein störungsfreies Herausnehmen des betreffenden Formteiles aus dem Schaumkörperteil erfolgen kann.

## Patentansprüche

1. Verfahren zum Herstellen eines Schaumkörperteiles, insbesondere eines Polsterschaumteiles für einen Flug- oder Fahrgastsitz, bei welchem Verfahren im Schaumkörperteil zumindest eine Ausnehmung, die sich zu dessen Oberfläche hin öffnet und zur Aufnahme eines Verankerungsteiles (7) für ein Bezugsmaterial vorgesehen ist, ausgebildet wird, indem in einer den Schaumkörperteil formenden Einschäumform zumindest ein entfernbares Formteil (1) angeordnet wird, das Formflächen aufweist, die in der Ausnehmung im Abstand von der Oberfläche des Schaumkörperteiles eine Erweiterung bilden, **dadurch gekennzeichnet, daß** als Formteil ein Profilkörper (1; 11; 21; 31; 41; 51; 61; 71; 81) mit näherungweise T-förmigem Querschnitt verwendet wird, daß der Fußteil (3; 13; 23; 33; 43; 53; 63; 73; 83) der T-Form an der formgebenden Wand der Einschäumform anliegend angeordnet wird, so daß der Querbalken (5; 15; 25; 35; 45; 55; 65; 75; 85) der T-Form die Erweiterung der Ausnehmung bildet, und daß eine solche T-Form verwendet wird, bei der die Unterseite des Querbalkens (5; 15; 25; 35; 45; 55; 65; 75; 85) in zumindest einem ihrer an den Fußteil (3; 13; 23; 33; 43; 53; 63; 73; 83) angrenzenden Abschnitte mit diesem einen stumpfen Winkel (α) bildet.

2. Verfahren nach Anspruch 1, **dadurch gekennzeichnet, daß** zur Verankerung des Bezugsmaterials in der Ausnehmung des Schaumkörperteiles ein Verankerungsteil (7) mit einem Flachprofil (9) verwendet wird, das in der durch den Querbalken (5; 15; 25; 35; 45; 55; 65; 75; 85) der T-Form gebildeten Erweiterung der Ausnehmung des Schaumkörperteiles im wesentlichen passend aufnehmbar ist.

3. Verfahren nach Anspruch 2, **dadurch gekennzeichnet, daß** das Flachprofil (9) des Verankerungsteiles (7) durch den dem Fußteil (3; 13; 23; 43; 53; 63; 73; 83) der T-Form entsprechenden Kanal der Ausnehmung in diese eingeführt und sodann unter Spreizen der Ausnehmung zum Einsetzen in deren Erweiterung verdreht wird.

4. Verfahren nach Anspruch 3, **dadurch gekennzeichnet, daß** ein Verankerungsteil (7) mit mindestens einer am Flachprofil (9) mittig und längsverlaufend angebrachten Befestigungsfahne (10) für Bezugsmaterial verwendet wird und daß die Befestigungsfahne (10) beim Einführen in die Ausnehmung des Schaumkörperteiles an das Flachprofil (9) angelegt wird.

5. Verfahren nach Anspruch 4, **dadurch gekennzeichnet, daß** als Flachprofil (9) zum Einsetzen in die Erweiterung so verdreht wird, daß die Verbindungsstelle zwischen Befestigungsfahne (10) und Flachprofil (9) der Mündung der Ausnehmung zugekehrt ist und sich die Befestigungsfahne (10) im Bereich des Fußteiles (3; 13; 23; 33; 43; 53; 63; 73; 83) der T-Form erstreckt.

6. Verfahren nach Anspruch 5, **dadurch gekennzeichnet, daß** am Verankerungsteil (7) ein Flachprofil (9) mit verdickten, abgerundeten Längsrändern (12) verwendet wird.

7. Nach dem Verfahren nach einem der Ansprüche 1 bis 6 hergestelltes Schaumkörperteil mit einer langgestreckten Ausnehmung mit T-förmigem Profilquerschnitt, wobei der Fußteil (3; 13; 23; 33; 43; 53; 63; 73; 83) der T-Form an der Oberfläche des Schaumkörperteiles mündet und der Querbalken (5; 15; 25; 35; 45; 55; 65; 75; 85) der T-Form eine Erweiterung der Ausnehmung bildet, in der ein für die Verankerung eines Bezugsmateriales dienender Verankerungsteil (7) aufgenommen ist, der eine sich durch den Fußteil (3; 13; 23; 33; 43; 53; 63; 73; 83) der T-Form erstreckende Befestigungsfahne (10) aufweist.

## Claims

1. A method for producing a foam part, notably a foam upholstery part for an aircraft or vehicle seat, in which at least one cavity is formed, open to the surface and intended to receive an anchoring part (7) for a covering material, whereby at least one removable shaped part (1) is arranged in a forming mould for the foam part, the said shaped part having shaped faces which form a widened area in the cavity at a distance from the surface, **characterised in that** the shaped part used is a profiled body (1; 11; 21; 31; 41; 51; 61; 71; 81) with approximately T-shaped cross section, that the foot section (3; 13; 23; 33; 43; 53; 63; 73; 83) of the T shape adjoins the forming wall of the forming mould, that the cross bar (5; 15; 25; 35; 45; 55; 65; 75; 85) of the T shape forms the widening of the cavity and that a T shape is used in which the underside of the cross bar (5; 15; 25; 35; 45; 55; 65; 75; 85) forms an obtuse angle α with it in at least one of its sections adjoining the foot section (3; 13; 23; 33; 43; 53; 63; 73; 83).

2. Method according to claim 1, **characterised in that** an anchoring part (7) with a flat profile (9) is used for anchoring the covering material in the cavity of the foam part, which can be held essentially with a snug fit in the foam part formed by the cross bar (5; 15; 25; 35; 45; 55; 65; 75; 85) of the T shape.

3. Method according to claim 2, **characterised in that** the flat profile (9) of the anchoring part (7) is introduced through the channel of the cavity corresponding to the foot section (3; 13; 23; 43; 53; 63; 73; 83) of the T shape and is then twisted for inserting into its widening while spreading the cavity.

4. Method according to claim 3, **characterised in that** an anchoring part (7) with at least one fixing flag (10) for fixing the covering material is used and that the fixing flag (10) is laid flat at the flat profile (9) when introducing it into the cavity in the foam part.

5. Method according to claim 4, **characterised in that** the flat profile is twisted for introducing it into the widening in such a manner that the point where the fixing flag (10) and the flat profile (9) are connected is facing the opening of the cavity and the fixing flag (10) extends in the area of the foot section (3, 13, 23, 33, 43, 53, 63, 73, 83) of the T shape.

6. Method according to claim 5, **characterised in that** a flat profile (9) with thick, rounded longitudinal edges (12) is used at the anchoring part (7).

7. Foam part produced according to one of the claims 1 to 6, with a long cavity having a T-shaped profile cross section, whereby the foot section (3; 13; 23; 33; 43; 53; 63; 73; 83) of the T shape opens at the surface of the foam part and the cross beam (5; 15; 25; 35; 45; 55; 65; 75; 85) of the T shape forms a widening of the cavity in which an anchoring part (7) serving the purpose of anchoring a covering material is located, the said anchoring part having a fixing flag (10) which extends through the foot section (3; 13; 23; 33; 43; 53; 63; 73; 83) of the T shape.

## Revendications

1. Procédé de fabrication d'un corps en mousse, en particulier d'un élément en mousse de rembourrage pour un siège passager dans un avion ou une voiture, selon lequel il est réalisé, dans le corps en mousse, au moins une cavité qui s'ouvre vers sa surface et qui est prévue pour loger un élément d'ancrage (7) pour une matière de revêtement tandis que, dans un moule de moussage moulant le corps en mousse est disposée au moins une pièce moulée (1) amovible présentant des surfaces moulées qui, dans la cavité, à distance de la surface du corps en mousse, forment une extension, **caractérisé en ce que** la pièce moulée utilisée est un corps profilé (1 ; 11 ; 21 ; 31 ; 41 ; 51 ; 61 ; 71 ; 81) présentant une section transversale a peu près en forme de T, **en ce que** la partie du pied (3 ; 13 ; 23 ; 33 ; 43 ; 53 ; 63 ; 73 ; 83) du moule en T est disposée en étant adjacente à la paroi de moulage du moule de moussage si bien que la traverse (5 ; 15 ; 25 ; 35 ; 45 ; 55 ; 65 ; 75 ; 85) du moule en T forme l'extension de la cavité, et **en ce qu'**il est prévu un moule en T dans lequel le côté inférieur de la traverse (5 ; 15 ; 25 ; 35 ; 45 ; 55 ; 65 ; 75 ; 85) forme, dans au moins l'une de ses sections adjacentes à la partie du pied (3 ; 13 ; 23 ; 33 ; 43 ; 53 ; 63 ; 73 ; 83), un angle obtus (α) avec celle-ci.

2. Procédé selon la revendication 1, **caractérisé en ce que**, pour l'ancrage de la matière de revêtement dans la cavité du corps en mousse, on utilise un élément d'ancrage (7) présente un profilé plat (9) qui peut être logé, en substance de manière ajustée, dans l'extension de la cavité du corps en mousse, l'extension étant formée par la traverse (5 ; 15 ; 25 ; 35 ; 45 ; 55 ; 65 ; 75 ; 85) du moule en T.

3. Procédé selon la revendication 2, **caractérisé en ce que**, le profilé plat (9) de l'élément d'ancrage (7) est introduit dans la cavité à travers le canal de la cavité correspondant à la partie du pied (3 ; 13 ; 23 ; 33 ; 43 ; 53 ; 63 ; 73 ; 83) du moule en T et est ensuite pivoté en élargissant la cavité pour l'insertion dans l'extension de celle-ci.

4. Procédé selon la revendication 3, **caractérisé en ce qu'**il est prévu un élément d'ancrage (7) avec au moins une bande de fixation (10) placée au centre sur le profilé plat (9) dans le sens longitudinal et destinée à la matière de revêtement et **en ce que** la bande de fixation (10) est appliquée contre le profilé plat (9) lors de l'introduction dans la cavité du corps en mousse.

5. Procédé selon la revendication 2, **caractérisé en ce que** le profilé plat (9) est pivoté pour l'insertion dans l'extension de telle sorte que le point de jonction entre la bande de fixation (10) et le profilé plat (9) est tourné vers l'ouverture de la cavité et que la bande de fixation (10) s'étend dans la zone de la partie du pied (3 ; 13 ; 23 ; 33 ; 43 ; 53 ; 63 ; 73 ; 83) du moule en T.

6. Procédé selon la revendication 5, **caractérisé en ce qu'**un profilé plat (9) présentant des bords longitudinaux épaissis et arrondis est utilisé sur l'élément d'ancrage (7).

7. Corps en mousse fabriqué selon le procédé selon l'une quelconque des revendication 1 à 6, présentant une cavité étendue dans le sens longitudinal avec une section profilée en T, la partie du pied (3 ; 13 ; 23 ; 33 ; 43 ; 53 ; 63 ; 73 ; 83) du moule en T débouchant sur la surface du corps en mousse et la traverse (5 ; 15 ; 25 ; 35 ; 45 ; 55 ; 65 ; 75 ; 85) du moule en T formant une extension de la cavité dans laquelle est logé un élément d'ancrage (7) qui sert à l'ancrage d'une matière de revêtement et présente une bande de fixation (10) traversant la partie du pied (3 ; 13 ; 23 ; 33 ; 43 ; 53 ; 63 ; 73 ; 83) du moule en T.
